(19)

Europäisches
Patentamt

European
Patent Office

Office européen
des brevets

(11)   EP 2 924 629 A1

(12)   **EUROPEAN PATENT APPLICATION**

(43) Date of publication:
**30.09.2015   Bulletin 2015/40**

(51) Int Cl.:
**G06Q 10/10** (2012.01)        **G05D 23/00** (2006.01)

(21) Application number: **15158196.4**

(22) Date of filing: **09.03.2015**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br>Designated Validation States:<br>**MA**<br><br>(30) Priority: **27.03.2014   US 201414228207**<br><br>(71) Applicant: **Palo Alto Research Center Incorporated**<br>**Palo Alto, California 94304 (US)** | (72) Inventors:<br>• **Smullin, Sylvia**<br>  **Menlo Park, CA 94025 (US)**<br>• **Beck, Victor**<br>  **Menlo Park, CA 94025 (US)**<br><br>(74) Representative: **Lord, Michael**<br>**Gill Jennings & Every LLP**<br>**The Broadgate Tower**<br>**20 Primrose Street**<br>**London EC2A 2ES (GB)** |

(54) **Computer-implemented system and method for externally inferring an effective indoor temperature in a building**

(57)   Energy usage data of an indoor climate control system, such as an HVAC system, for a building and ambient temperature data are obtained for a time period of interest with a time resolution that reflects the physically relevant time scales. The data are formed into time series. A fit of the data is performed, by setting the energy usage data as the independent variable to which the ambient temperature data is linearly fit. A fit could be, for instance, an ordinary least squares linear regression, a frequentist regression, a Bayesian regression, or a robust regression. The ambient temperature at the intercept of the fit where the energy usage equals zero is taken as the effective thermostat set point of the indoor climate control system and serves as a surrogate for the effective indoor temperature of the building.

FIG. 4

EP 2 924 629 A1

**Description**

**Field**

This application relates in general to indoor climate control within a building, and in particular, to a computer-implemented system and method for externally inferring an effective indoor temperature in a building.

**Background**

Systems to control indoor climate are commonly found in residential, commercial, retail, and industrial buildings. Whether in the form of a dedicated cooling- or heating-only system, or a combined heating, ventilation and air conditioning (HVAC) system, indoor climate control systems serve two main purposes. First, these systems help maintain thermal comfort for occupants of a building by heating, cooling, or ventilating air within a structure relative to ambient temperatures and conditions. Second, these systems help to improve air quality through filtration of airborne particulates, provide isolation from outdoor environments, and remove humidity from the air.

The operation of an indoor climate control system is normally controlled via a thermostat or similar indoor controller that measures indoor temperature and regulates the On- and Off-cycling of the system components to maintain the indoor temperature around the thermostat set point. Typically, each operating cycle includes a time during which the system is running continuously as necessary to bring the building's interior temperature into a temperature range defined about a desired indoor temperature followed by time during which the system is at idle or on standby.

Indoor climate control system usage contributes significantly to the energy consumption of a building, especially when operated in an inefficient manner. From the perspective of an energy consumer, running an indoor climate control system less frequently can have a direct effect on the overall cost of energy used. Nevertheless, the average residential consumer may lack a sufficient incentive to make changes purely to save on a monthly energy bill, whether by upgrading the structural aspects of a building, changing the indoor climate control system, including heating and cooling components, ducting, and thermostats, modifying their indoor climate control system usage behaviors, or modifying other behaviors, such as uses of other appliances that impact the usage of the indoor climate control. On the other hand, while reducing energy consumption remains discretionary for most consumers, power utilities may be under a compulsory mandate to urge consumers to reduce the amount of energy used in an effort to balance an ever-increasing demand for more energy, or lowering consumer energy consumption may simply make good fiscal sense, for example, to help a utility save or defer capital expenditures for building new power generation plants, running transmission lines, and upgrading infrastructure.

Frequently, power utilities urge consumers to reduce energy consumption through educational and compensatory outreach programs, which can include incentives, rewards, advice, outreach, education, and other forms of offerings to the consumers. For example, some power utilities offer rebates to incent consumers to make structural changes, such as switching to compact fluorescent lights or increasing thermal insulation. Problematically, such rebates may not always be awarded to those consumers who would benefit most and may not always incent structural or behavioral changes that will have the most impact on energy savings for each consumer, such as when rebates are offered to all consumers on a first-come, first-served basis.

Consumers who are "energy outliers," that is, consumers who use considerably more energy than neighboring or comparable consumers, are better targets for energy consumption reduction incentives, although they may be unaware of their outlier status or of what changes are needed to help reduce their energy consumption. House energy audits can help consumers to prioritize the changes necessary to become more energy efficient, but energy audits are often costly and they do not account for how human behavior and the operation of the indoor climate control system can vary over time. Moreover, monitoring consumers for reductions in energy consumption after changes have been made is difficult. Energy usage must be measured over long time periods, and weather, behavioral, and structural factors bearing on energy usage must be deconvoluted from the energy usage measurements to correlate energy consumption reduction incentives to realized energy savings. Without visibility into or understanding of all these compounding factors that determine energy usage, the savings accomplished by rebate programs may be calculated as deemed savings, rather than directly measured or assessed.

As used herein, an energy outlier is a consumer who uses more energy for indoor climate control than other comparable consumers, where the comparison may include a normalization for size of house, cooling degree days or heating degree days, the number of occupants in a house, or other information. A consumer that uses more energy for indoor climate control in a house than most others may use more energy for one or more of the following reasons: an extraordinary thermostat set point, malfunctioning or poor placement of the thermostat, malfunctioning of the climate control system due to poor maintenance or other failure, incorrect sizing of the climate control system for the building, poor thermal insulation, large effective leak area between the building and the outdoors, high internal loads due to occupants and appliance usage, or other reasons. Understanding of the relative thermal performance of houses and usage of the indoor climate control system can be used for better targeting and assessing incentive programs related to reduction of energy consumption for indoor climate control. The recipients of incentive programs will generally be the person or entity most directly connected with being able to actually use the form of incentive offered, and not the building or house proper. For example, a homeowner living in his house who is also a customer of a power utility is usually responsible for setting the thermostat in his house. If the house has a very low thermostat set point during a summer cooling season, incenting that customer to change the thermostat set point may be cheaper and more effective than incenting that same customer to blow new insulation into the walls, which he, as a homeowner, could do. In contrast, only the owner of an apartment building would likely be able to make structural changes to the building, rather than any tenants or his property management company, which generally only maintains and repairs, and does not ordinarily replace or upgrade, building indoor climate control systems and structure, like indoor climate control systems or wall insulation, or other capital improvements.

Indoor temperature, as reflected by a thermostat set point, is a key determinant in the amount of energy used for indoor climate control, particularly during the cooling and heating seasons. In standalone houses, the thermal load on an indoor climate control system can be expected to be mainly due to ambient temperature and conditions, whereas in commercial, retail, and industrial spaces, the thermal load may be determined more strongly by occupancy or appliance and machinery usage.

Externally determining indoor temperature presents a special problem in understanding of energy consumption for indoor climate control and reduction of such consumption. There are a few naive ways to guess a house's thermostat set point. For instance, one could assume that the indoor temperature is 72° F by following the standards for de facto settings in American thermostats or 75° F by following ASHRAE design standards, as explained *infra*. Alternatively, one could assume that the thermostat set point corresponds to the ambient temperature at which an air conditioner (for cooling) first runs (or cycles On) or the ambient temperature at which the thermostat set point last causes the air conditioner to go to idle or standby (or cycle Off) in a day. The last two assumptions suffer from a lack of recognition of other loads on the system and any delays due to finite time constants in the building and a finite deadband in the system controller.

Moreover, any actual reporting of thermostat set points, which is scarce, is typically either provided manually, which may lack accuracy due to human recall error or due to unreported varying set points, or through so-called "smart" thermostats capable of external communication. Even a temperature reported by a thermostat can misrepresent the house temperature if there are large variations in temperature between where the thermostat is located and other parts of the house where occupants are sensitive to temperature.

Knowledge of an indoor temperature is crucial for understanding a building's energy use for indoor climate control; the difference between ambient temperature and indoor temperature as controlled by an indoor climate control system is a key determinant of the amount of heat that needs to be added by a heater or removed by an air conditioner. A comparison between indoor temperatures in different buildings can further understanding of why one building may use more energy for indoor climate control than another building. Though exact measurements of indoor temperatures would provide the most information, for making a comparison between buildings, a less quantitative assessment for the purposes of comparison can be useful, sufficient, and more readily-available.

For instance, M. Fels et al., PRISM: An Introduction, Energy and Bldgs., Vol. 9, pp. 5-18 (1986), the disclosure of which is incorporated by reference, discloses a reference temperature for heating or cooling that is derived from a regression of monthly fuel bills to mean daily ambient temperatures. The reference temperature, based on a steady-state energy balance model, is related to indoor temperature and internal heat gains. The model creates an overall prediction of energy usage, but is not statistically robust in the reference temperature parameter. Moreover, the reference temperature is sensitive to changes in occupant behavior, and anomalous periods of time are hidden by temperature averaging. The model is also disturbed by nonlinearities inherent in the performance of the climate control system with respect to temperature, and may be confounded by the presence of other appliances within the building that use the same fuel as the climate control system with temperature-varying behavior.

Similarly, the 2013 ASHRAE Handbook, Fundamentals, SI Ed., Ch, 19 (2013) ("ASHRAE Handbook"), the disclosure of which is incorporated by reference, discloses dynamic analyses of the thermal performance of the house. The analyses are sensitive to the varying time constants that are relevant to a thermal analysis of a home. However, such analyses often depend on disparate input data streams and connecting the results of such analyses to a physical parameter, such as a thermostat set point, is impracticable.

Therefore, there is a need for an approach to providing an indirect and robust form of thermostat set point measurement in situations where comparisons rather than predictions are important and quantitative accuracy is neither needed nor easily achieved.

## Summary

Energy usage data of an indoor climate control system, such as an HVAC system, for a building and ambient temperature data are obtained for a time period of interest with a time resolution that reflects the physically relevant time scales. The data are formed into time series. A fit of the data is performed, by setting the energy usage data as the independent variable to which the ambient temperature data is linearly fit. A fit could be, for instance, an ordinary least squares linear regression, a frequentist regression, a Bayesian regression, or a robust regression. The ambient temperature at the intercept of the fit where the energy usage equals zero is taken as the effective thermostat set point of the indoor climate control system and serves as a surrogate for the effective indoor temperature of the building. In addition, the effective indoor temperatures for a group of houses can be estimated. The effective indoor temperatures of the group can be compared and used for targeting communications with homeowners and to assess changes to thermal behavior of house, indoor climate control system, or the thermostat. Finally, with additional information about the actual indoor temperature, the effective indoor temperature can be used to assess the relative size of different thermal loads in the house.

One embodiment provides a computer-implemented system and method for externally inferring an effective indoor temperature in a building. A usage time series that reflects indoor climate control system usage in a building over a plurality of operating cycles is obtained. Each operating cycle includes a "go-to-idle" state transition during which the indoor climate control system transitions from a running state to an at idle state and a "go-to-run" state transition during which the indoor climate control system transitions from an at idle state to a running state. The indoor climate control system runs for a period of running time between each "go-to-run" state transition and the next "go-to-idle" state transition, the indoor climate control system remaining at idle for a period of idle time between each "go-to-idle" state transition and the next "go-to-run" state transition. The running time is the time necessary to bring the building's interior temperature into a temperature range defined about a desired indoor temperature for the building. A temperature time series for the temperature ambient to the building over the same plurality of the operating cycles is also obtained. A linear fit of the usage time series and the temperature time series, with data in the usage time series preferably considered as independent variables to which data in the temperature data are linearly fit, is performed. The temperature at an intercept of the linear fit at which the usage equals zero is extracted as an effective indoor temperature of the building.

The foregoing approach fundamentally gets at *why* one building might be using more energy for indoor climate control system usage than others by narrowing the set of possible reasons and showing which of the buildings might have extraordinary thermostat set points. The comparison between houses of their effective indoor temperatures could be used in conjunction with other comparisons of thermal performance of house or occupant behavior to determine which houses would most likely benefit from what incentives being provided to their owner, occupant, or responsible party. If a power utility wants to offer rebates or incentives related to thermostats to the owner, occupant, or responsible party, the utility might, for example, choose to make the offer first to those owners, occupants, or responsible parties of houses with extraordinarily low effective set points during the summer cooling season.

In addition to being used to select which owner, occupant, or responsible party of a house to receive a particular incentive, the foregoing approach could further be used as part of a study of a group of houses, including identifying the top reasons why one house uses more energy than others and choosing the best incentives for the owner, occupant, or responsible party of that house. If a power utility wants to offer an incentive to the owner, occupant, or responsible party of one house to make some behavioral or structural change, the foregoing approach could be used to choose what kind of behavioral or structural change to incent for that one house, such as a change in thermostat set point or weatherization, by way of their owner, occupant, or responsible party.

Finally, the foregoing approach could be used to monitor the impact of any energy efficiency program by making the same comparison before and after any incentive program to the owner, occupant, or responsible party of a building has been implemented.

Still other embodiments of the present invention will become readily apparent to those skilled in the art from the following detailed description, wherein is described embodiments of the invention by way of illustrating the best mode contemplated for carrying out the invention. As will be realized, the invention is capable of other and different embodiments and its several details are capable of modifications in various obvious respects, all without departing from the spirit and the scope of the present invention. Accordingly, the drawings and detailed description are to be regarded as illustrative in nature and not as restrictive.

## Brief Description of the Drawings

FIGURE 1 is a functional block diagram showing factors affecting the operation of an indoor climate control system in a house.

FIGURES 2 and 3 are graphs respectively showing, by way of examples, cooling power and heating power as functions of indoor temperature.

FIGURE 4 is a flow diagram showing a computer-implemented method for externally inferring an effective indoor temperature in a building in accordance with one embodiment.

FIGURE 5 is a flow diagram showing a routine for processing duty cycles for use in the method of FIGURE 4.

FIGURE 6 is a flow diagram showing a routine for filtering the time series data for use in the method of FIGURE 4.

FIGURE 7 is a flow diagram showing a routine for screening the time series data for use in the method of FIGURE 4.

FIGURE 8 is a graph comparing, by way of example, effective thermostat set point to actual thermostat set point for a plurality of houses.

FIGURE 9 is a block diagram showing a computer-implemented system for externally inferring an effective indoor temperature in a building in accordance with one embodiment.

**Detailed Description**

An "energy outlier" is a consumer of a power utility who uses considerably more energy for indoor climate control system operation than neighboring or comparable consumers under similar ambient temperatures and conditions. There are many reasons why a consumer may be an energy outlier for indoor climate control system usage. For air conditioning, the reasons may be due to an overly-low thermostat set point; an overly-high internal thermal load due to high occupancy, lots of cooking activity, or large numbers of appliances turned on; a leaky house due to poor insulation; or some other reason.

Understanding why energy outliers are outliers can help a power utility in deciding which incentives or education to offer to what customers. Power utilities in the residential energy market lack sufficient tools for designing rebate or other incentive offerings and verifying the impact of such rebates or incentives on energy consumption. The discussion that follows provides a power utility with a set of tools that can be used to identify and narrow the set of reasons underlying why a consumer is an energy outlier, so as to help choose energy consumption reduction incentives to offer to encourage structural or behavioral changes. For example, does the house of an energy outlier have poor insulation? Lots of unshaded windows? An extraordinary thermostat set point? An improperly-sized indoor climate control system? A detailed energy audit can answer some of these questions. Here, the goal is to deduce what is possible with a limited set of information about the house, specifically, energy usage data that indicates when the indoor climate control system is running or at idle (or on standby), that is, cycling On and Off, and weather information for the same time period as the energy usage data.

These same tools can be used to choose those customers of a power utility to whom to offer a particular incentive by narrowing the set of customers that are most likely to receive maximal energy consumption reduction benefit from the incented change. Much of the discussion is presented in the context of energy use for cooling with air conditioning; however, except as specifically related to humidity, the discussion can equally be applied *mutatis mutandis* to energy use for heating or other forms of indoor climate control that involve the use of a thermostat or other temperature-based control system.

The effective thermostat set point $T_{eff}$ provides a useful comparison of the actual thermostat set points among a group of houses. Moreover, the effective thermostat set point $T_{eff}$ provides a powerful qualitative and indirect measurement when quantitative accuracy is neither needed nor easily-achieved. Indoor climate control system usage contributes significantly to the energy consumption of a building, especially when operated in an inefficient manner. For instance, in a climate with a long cooling season, the air conditioner in a house can be the largest determinant of overall electricity usage for a consumer. If the consumer makes behavioral or structural changes to reduce the energy used for air conditioning, the consumer can save money. Additionally, the consumer's power utility, as well as the community at large, can benefit from a reduction in energy demand during peak times on hot summer days, and the power utility can benefit by better meeting legislative requirements or other mandates or incentives for reducing energy consumption. Everyone can benefit from reduced energy consumption, which can reduce greenhouse gas emissions from power plants.

The effective thermostat set point $T_{eff}$ is a robust measure of thermal behavior of the house, indoor climate control system, and occupants over a measured period of time. By building on disaggregated climate control usage data, the measurement of $T_{eff}$ is not confounded by other systems that use the same fuel as the indoor climate control system. By incorporating relevant time scales, including the diurnal temperature cycles, the thermal time constants of the home, and the cycling time of the climate control system, $T_{eff}$ may include, rather than be distorted by, the non-linearities inherent in a given indoor climate control system and, additionally, $T_{eff}$ provides simple ways for selecting anomalous periods of time to discard from data before analysis to reduce the number of outliers in the data that are subject to regression. Though the effective thermostat set point $T_{eff}$ is still offset from the true indoor temperature at the thermostat due to other internal loads in the home, the robustness of $T_{eff}$ enables a comparison between homes and a comparison before and after changes to one home.

Energy usage is directly related to the running time of an indoor climate control system. In turn, running time and efficient operation are related through thermostat set point, system sizing, thermostat set point adjustment, and other factors. An indoor climate control system may run less efficiently upon being turned on, and thus the overall efficiency will be greater when the running times are longer and the system cycles fewer times. The apparent sizing of the system can be extrinsically inferred, such as described in commonly-assigned U.S. Patent application, entitled "Computer-Implemented System and Method for Externally Evaluating Sizing of an Indoor Climate Control System in a Building," Serial No. 14/228209, filed March 27, 2014, Docket No. 20131645US01, pending, the disclosure of which is incorporated by reference. In addition, the efficiency contributions of an appropriate thermostat set point, proper system sizing, and other factors can be negated through inefficient indoor climate control system usage; regular adjustment of thermostat set point in response to actual thermal comfort need can significantly contribute to efficient indoor climate control system operation. Patterns of thermostat set point adjustment can also be externally inferred, such as described in commonly-assigned U.S. Patent application, entitled "Computer-Implemented System and Method for Externally Evaluating Thermostat Adjustment Patterns of an Indoor Climate Control System in a Building," Serial No. 14/228211, filed March 27, 2014, Docket No. 20131646US01, pending, the disclosure of which is incorporated by reference.

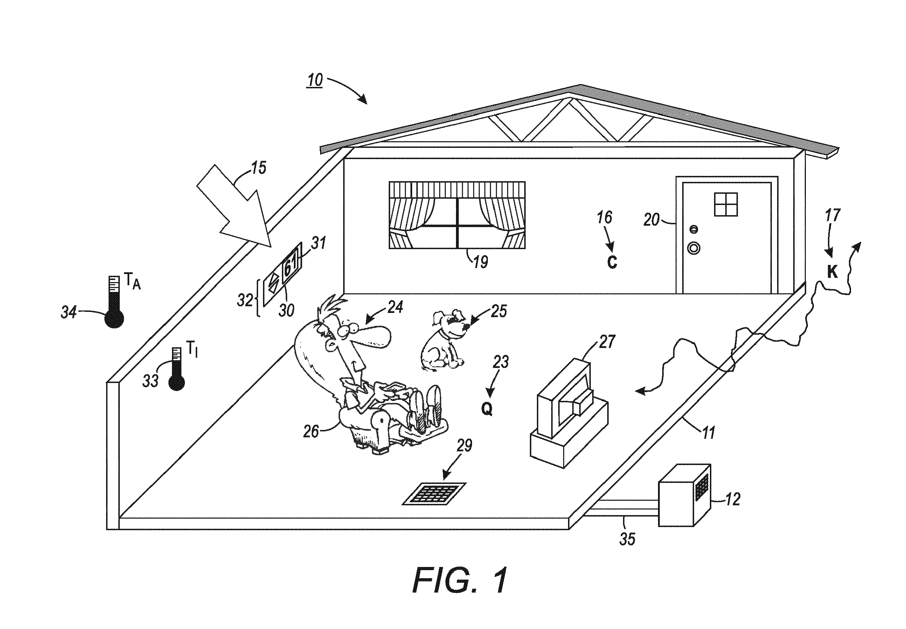

Knowledge of an indoor temperature is crucial for understanding a building's energy use for indoor climate control; such understanding is a key determinant of the amount of heat that needs to be added by a heater or removed by an air conditioner. Indoor climate control system usage is influenced by several factors, which play into effective indoor temperature. FIGURE 1 is a functional block diagram showing factors 10 affecting the operation of an indoor climate control system 12 in a house 11. Although described herein with specific reference to a house 11, the same or similar factors affect the operation of other types of buildings, including commercial, industrial, and so forth, except as otherwise noted.

Effective indoor temperature 33, as reflected by a thermostat set point ($T_0$) 31, is a key determinant in the amount of energy used for indoor climate control, particularly during the cooling and heating seasons, which can also provide an explanation as to why some houses may use more energy for indoor climate control than their neighbors, peers, or comparable customers. Herein, the terms neighbors, peers, and comparable customers can be used interchangeably.

Furthermore, if the actual indoor temperature in each of a group of houses is known, houses that have a different relationship between actual and effective thermostat set points ($T_0 - T_{eff}$) from those relationships of the majority of the houses are houses that are expected to have a higher ratio of internal heat loads to envelope loads of a house, either due to outstanding internal loads, for example, due to other appliances in the house or occupants, or heat transfer through the envelope of the house due to conduction, infiltration, or radiation. In this way, a comparison of $T_{eff}$ and actual indoor temperatures can be used to make guesses about which houses are extraordinary in their thermal performance and thermal behavior for reasons other than thermostat set point.

For purposes of discussion, operation of the indoor climate control system 12 is assumed to be controllable via the thermostat 30, or similar indoor controller that measures indoor temperature, which provides a temperature controlling component to the indoor climate control system 12, and regulates the On- and Off-cycling of the system components between running and at idle (or on standby) to maintain the indoor temperature around the thermostat set point 31. The thermostat set point 31 can be manually adjusted using controls 32 provided with the thermostat 30, automatically adjusted by a thermostat that learns occupant behavior, can be set to change on a timer, or could respond to other conditions, such as indoor humidity or occupancy. Other thermostat set point 31 modes of adjustment or operation are possible.

Data showing usage of an indoor climate control system must be available for the house 11, specifically the times at which the system is running and at idle or on standby. Data showing the actual power used by an indoor climate control system, though, is not essential and may be of secondary consideration. In some cases, the inference of effective indoor temperature described herein works better in residences, than in some commercial, retail, and industrial buildings due to the expected magnitude of thermal loads in addition to thermal transfer through the building envelope in these different types of buildings, where there may be significant loads due to appliances, machinery, or occupants inside the building. Additionally, this inference may work better in buildings that have only one climate-controlled zone and one climate-control system, in comparison to buildings that have multiple zones or multiple climate-control systems.

Ambient temperature information for the same time period as covered by the indoor climate control system usage data must be available for a geographic area that includes or represents the location of the house 11. Natural variations in weather provide continually-varying experiments on each building. Ambient temperature may be the outdoor dry bulb temperature, the sol-air temperature, or a temperature measured on the building envelope.

Information about indoor climate control system usage must be separated from other energy usage in a house. For the inference of effective indoor temperature described herein, only the time that an air conditioner is running and has gone to idle or standby, rather than the total energy draw, needs to be considered. For an air conditioner, which is generally expected to have cooling power and coefficient of performance (COP) that vary with outdoor temperature, this usage time series may have different trends than the power or total energy draw that is commonly used in other analyses; for an electric resistive heater, the amount of energy drawn is expected to be close to directly proportional to the time that the heater is turned on. System usage data can be derived from various sources. For instance, many power utilities are currently installing "smart" power meters that monitor energy usage at 1-hour or 15-minute time resolutions. Monitoring at still higher time resolutions, such as at one-minute intervals, can be one way of indirectly determining when an air conditioner runs and goes to idle or standby in a house 11 over the course of a cooling season, particularly as cycles of air conditioners in houses are often on the order of 5-20 minutes in duration, provided a disaggregation algorithm is applied to the meter data to separate-out air conditioning usage. Smart meters and disaggregation algorithms can provide new data streams to power utilities and other users, enabling tools, such as described herein. Still other sources of indoor climate control system usage data are possible, including a meter that monitors the electrical current to an air conditioning circuit alone, a sensor that monitors air flow in the duct work, a sensor that measures the vibration of the air conditioning when running, and usage reported by smart thermostats. The total amount of electricity, gas, or other fuel used over a period of time for an indoor climate control system can also be used as a proxy for the fraction of time that a system is running, even if usage is not monitored with a time resolution that is high enough to distinguish the exact minute during which the climate control system cycles runs or goes to idle or standby. The fidelity of this approximation depends on how much the efficiency of the indoor climate control system varies with ambient temperature and the time resolution at which fuel use is monitored.

Throughout the day, several factors 10 can affect the operation of an indoor climate control system 12. These factors include the heat capacity C (16) of the house 11, the thermal conductance K (17) of the house 11 between the interior and the exterior, an interior heat load $Q_{in}$ (23) generated within the house 11, and a non-temperature-driven heat load $Q_{out}$ from outside the house 15. Sources of heat load $Q_{in}$ include the heat generated by people 24, pets 25, furnishings 26, and operating appliances 27 located in the house 11, which can cause the heat load $Q_{in}$ to continually change. External heat loads that are not related to the temperature difference between indoors and outdoors include the latent load due to infiltration. Loads due to radiation from the sun and radiative coupling to the environment may be included in either $Q_{out}$ or may be coupled into the term proportional to the temperature difference. Radiation may also be incorporated into the model, using knowledge or assumptions about the building type, structure, and location, by using the sol-air temperature as the ambient temperature, instead of the outdoor dry bulb temperature, such as described in the ASHRAE Handbook, cited *supra*.

In addition, in the case of air conditioning, ambient temperature that is higher than the indoor temperature creates a load via thermal conduction from outside to inside. In the case of heating, ambient temperatures that is lower than the desired indoor temperature is of importance. The ambient temperature also creates a load via infiltration when leaks in the house, ventilation systems, open doors or windows, or chimneys allow outdoor air to come inside a house. Radiation between the surroundings, including the ground, the sky, and the entirety of the outdoor environment, also create a means for heat exchange between the outdoors and the building envelope, with further heat exchange between the building envelope and the indoor air determining the load on the interior of the house.

In the simplified model described herein, the effective thermal conductance K can encompass all temperature-dependent sensible heat transfer between the indoor and outdoor environment through the building envelope due to conduction, infiltration, convection, and radiation, which, in some cases, may be appropriately linearized. The thermal conductance K determines the temperature-dependent heat transfer between the interior of the house 11 at temperature T (33) and the ambient temperature outside of the house $T_A$ (34). In this model, there is no spatial variation of $T$ or $T_A$, and no explicit convective or radiative heat transfer. More generally, K can be considered to be an overall heat loss coefficient that reflects properties of the building envelope.

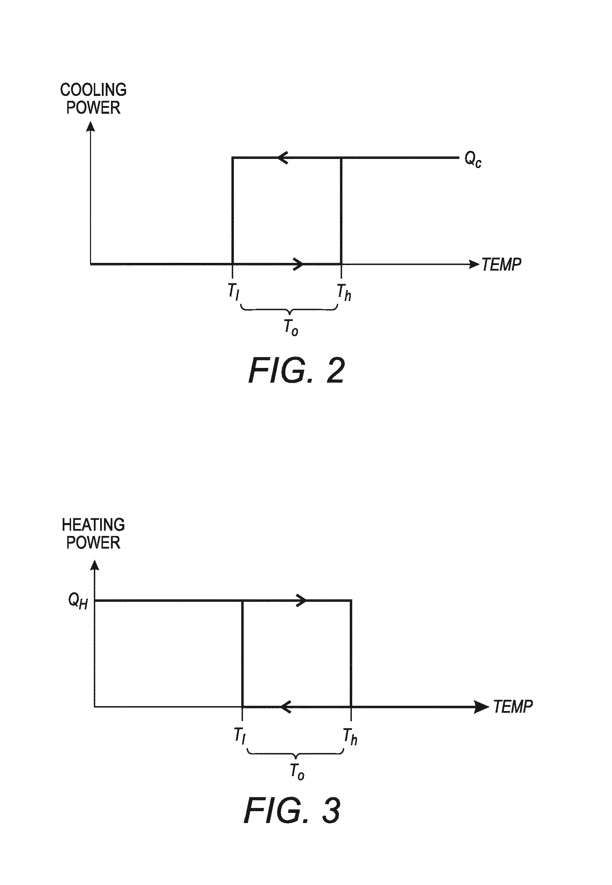

In the model, the thermostat 30 of the house 11 is set to maintain the interior temperature 33 at T = $T_0$, where $T_0$ is the set point chosen for the thermostat 30. The thermostat 30 operates using a "deadband." FIGURES 2 and 3 are graphs respectively showing, by way of examples, cooling power (for air conditioning) and heating power (for heating) as functions of indoor temperature. For simplicity, any variations in system cooling power or heating power with temperature are ignored in the graphs, which are intended to convey a simple version of a thermostat control scheme. To avoid constant cycling between running and at idle (or on standby) modes, most thermostats operate using a "deadband" that begins at a temperature $T_l$ slightly below and ends at a temperature $T_h$ slightly above the thermostat set point $T_0$. An indoor climate control system will start running when the indoor temperature falls below the deadband (for heating) or rises above the deadband (for cooling). Obversely, the system will go to idle or standby when the indoor temperature rises above the deadband (for heating) or falls below the deadband (for cooling). Though indoor climate control systems may have control schemes that are more complicated, this deadband model captures the most important features of thermostat operation.

Referring back to FIGURE 1, more precisely, an air conditioning system will start running when $T \geq T_h = T_0 + dT_h$ and will go to idle or standby when the AC when $T \leq T_l = T_0 - dT_l$, where $dT_h$ and $dT_l$ are upper and lower offsets that define the deadband of the thermostat 30, and $T_0$ is the thermostat set point. In an indoor climate control system, this deadband may be set in the thermostat alone, in some other component of the system, or by a combination of settings in the thermostat and one or more other components of the system. This behavior may also be called *hysteresis* in the system, and, in this context, the deadband may also be called a *hysteresis band* or the tolerance of a thermostat. The mechanical device that accomplishes this effect may be, for example, an anticipator in an analog thermostat or a control built into a microprocessor in a digital thermostat.

The duration of the running time of an air conditioner depends on its cooling power, the sum of the loads, the thermal properties of the building, and the size of the deadband. The sizing of the indoor climate control system refers to the comparison of the cooling power (for an air conditioner) or the heating power (for a heater) in relationship to the loads experienced. In the simple model described herein, the thermal load into the house 10 when the air conditioning goes to idle or standby is a sum of the heat load across the envelope determined by the thermal conductance K and the temperature difference between outside and inside and all other loads $Q$, where $Q = Q_{in} + Q_{out}$. The rate of change of the internal temperature with time T is determined by the heat capacity $C$ and the sum of the heat loads:

$$C\dot{T} = Q + K(T_A - T) \qquad (1)$$

If the heat capacity C, the ambient temperature $T_A$, the effective conductance $K$, and the non-envelope heat load $Q$ are assumed to be constant over one cycle, this equation can be solved yielding an exponential change over time in the temperature difference between indoors and outdoors. This equation can be inverted to solve for the time $t_f$ that the air conditioning goes to idle or standby as the temperature rises from $T = T_l$ to $T = T_h$ (assuming $T_A > T_h$). In the case where the deadband is much smaller than $T_A - T_0$ and $Q/K$, the resulting logarithmic expression can be linearized.

In the case when the air conditioning is running (when $T_l < T < T_h$), the differential equation is the same as Equation (1) with an additional term on the right hand side of the cooling power of the AC, — $|Q_C|$ The air conditioning includes the actual cooling unit and the components that deliver the cooling power to the location of the thermostat 30. For central air conditioning, for example, the components generally includes a fan (not shown) that distributes cold air via ductwork 35 and through registers 29 into the interior of the house 11; the ductwork 35 has a thermal connection to the outdoors, for instance, via leaks, as well as to the interior space being cooled. The thermostat 30 is generally located in a place that is likely not the coldest part of the system. In this model, the details of the thermal network of the air conditioning, ductwork, and forced convection are factored into the cooling power $Q_C$, where the cooling power $Q_C$ represents the cooling power that is experienced by the thermostat 30. Here, only sensible power is considered, as most thermostats respond only to temperature.

As with outdoor temperature, any variance in $Q$ or $Q_C$ over the cycle is ignored in this model. The solution to this differential equation from the time that the air conditioning turns on at $T = T_h$ to the time that the air conditioning turns off at $T = T_l$ yields the on-time of the cycle, $t_n$. To make a functioning system, the cooling power of the air conditioning at the thermostat $Q_C$ (where $Q_C > 0$) must be greater than all thermal loads at the given indoor temperature and outdoor temperature. As in the case of $t_f$, the logarithmic expression for $t_n$ can be linearized when ($-T_A + T_0 - Q/K + Q_C/K \gg dT_{h,l}$). This simplification fails when the sum of the thermal loads is very high and the cooling power of the air conditioner is barely sufficient.

Both $t_n$ and $t_f$ increase with heat capacity and deadband. $t_n$ increases and $t_f$ decreases with an increase in ambient temperature, an increase in the non-envelope heat load, a decrease in the thermostat set point, and an increase in thermal conductance. $t_n$ also increases with a decrease in the cooling power $Q_C$ of the air conditioner. In normal operation, the deadband and heat capacity are not expected to change often or to change significantly. The overall thermal conductance might change if there are structural changes to the house. The internal heat load $Q_{in}$ is expected to vary significantly over a day, though the variance may be small over one cycle of the air conditioner. Thermal conduction is still expected to be the dominant method of heat transfer for a house. The cooling power is expected to change as a function of indoor and outdoor temperature and indoor humidity; this change is expected to be small over one cycle. The thermostat set point may change over a day and the ambient temperature is expected to change significantly over a day. For real systems, the deadband $T_h + T_l$ is generally expected to be on the order of 1° C; a smaller deadband could mean that the air conditioning cycles between running and going to idle or standby constantly, and a larger deadband might allow intolerable variation in the indoor temperature.

This model is highly simplified in considering the house as one lumped thermal mass and only the variation over a cycle of the indoor temperature is considered. Linearized solutions to the two first-order differential equations yield simplified expressions for the time that the air conditioning is at idle or on standby ($t_f$) and the time that the air conditioning is running ($t_n$). These expressions are derived from a simple one-thermal-mass model of a house with one thermal conductance, described by a first-order differential equation and solved for one cycle in which the ambient temperature $T_A$, non-envelope heat load, air conditioning cooling power, thermostat set point, and deadband do not vary. The only assumption in the linearization of the original logarithmic expressions for $t_n$ and $t_f$ is that the temperature differences that define the deadband are the smallest temperatures in the problem, which is generally true when the air conditioning capably cools, that is, $t_n$ is not too large, and when the total heat load is enough to keep the air conditioning cycling regularly, that is, $t_f$ is not too large. These assumptions imply that the duty cycle is not significantly close to either 0 or 1, further assuming that the cooling power $Q_C$ is independent of temperature and the only parameter in the problem that changes over one cycle is the indoor temperature $T$.

Using the approximations described above, the duty cycle ($dc = \dfrac{t_n}{t_n + t_f}$) is linearly related to temperature for intermediate values *of dc.* With these definitions and the linearization assumption, the duty cycle *dc* can be defined:

$$dc = \frac{dT \cdot K + Q}{Q_C} \qquad (2)$$

where $dT = (T_A - T_0)$.

This linear relationship between the fraction of the time that the air conditioner is running, as related to the ratio of thermal loads to cooling power, is similar to the steady-state energy balance that may be the basis for analysis of air conditioner usage over longer periods of time. Here, that relationship is derived with consideration for the transient nature of the internal temperature; by accounting for the appropriate physical time scale of the air conditioner, this analysis allows for a more robust derivation of the relationship between air conditioner usage and ambient temperature.

In a real house that has a thermal environment much more complex than what is described herein, the conduction load is expected to be the dominant heat load with the most variance and the duty cycle is expected to roughly be a linear function of the ambient temperature $T_A$ for intermediate values of the duty cycle since the temperature changes in the indoor temperature T for a fixed thermostat set point 31 and small deadband are small, although this linear formulation is expected to fail for small and large values *of dc.* Inverting Equation (3) yields:

$$T_A = dc\frac{Q_C}{K} + T_0 - \frac{Q}{K} \qquad (3)$$

This simplified expression can be used to find the effective indoor temperature, as reflected by the effective thermostat set point $T_{eff} = T_A(dc = 0)$:

$$T_A(dc = 0) = T_0 - \frac{Q}{K} \qquad (4)$$

The effective thermostat set point $T_{eff}$, as defined by the right hand side of Equation (4), is derived from the air conditioning cycles. The effective thermostat set point is less than the actual thermostat set point, due to loads that would be present in a house and not proportional to the temperature difference between indoors and outdoors. The difference between effective and actual thermostat set point may be, for example, a few degrees Celsius. Although this methodology does not indicate that *actual* set point of a house, even in the simplified model described, the effective thermostat set point is nevertheless useful in making comparisons between houses.

However, this indication of the effective indoor temperature, using thermostat set point $T_{eff}$, is subject to several considerations. First, in a real house, the heat load $Q$, cooling power $Q_C$, and chosen thermostat set point $T_0$ can vary throughout the day. Thus, Equation (4) is useful only for averages over the time period that are analyzed using a regression analysis. Second, a temperature is assigned that defines an entire duty cycle, even though the ambient temperature $T_A$ may vary over that duty cycle. Limiting the inference of effective indoor temperature to the intermediate values of *dc* and to those duty cycles where the total time is less than a certain threshold, such as two hours, can reduce inaccuracy by accounting for the relationship between the air conditioner cycle time and the natural time scale over which the ambient temperature varies. Third, the differing time delays of conduction and radiative loads on a house, or a large deadband can skew the slope and intercept in the linear fit; this inaccuracy may be reduced by using a lagged temperature for each duty cycle to account for the delay between the time that the ambient temperature changes and the time that the load is experienced by the thermostat. The lagged temperature time series assigns a temperature to each point in time that is the temperature at a time in the past relative to that point in time. In the case of using a duty cycle series, this lagged temperature value may be defined, for example, using a moving average of a window of time that begins before the given operating cycle or by the temperature measured at a certain time before the beginning of the operating cycle. The value of the delay may be chosen, for instance, to be representative of a certain type of building or may be chosen to reduce statistical error in a given regression. Fourth, in a linear fit of imperfectly-correlated data, the ordinary least squares regression of $X(Y)$ yields a different function than the ordinary least squares regression of $Y(X)$. Here, the temperature is the actual physically independent variable. However, *dc* should be considered the independent variable, with $T_A(dc)$ considered in the regression, since the figure of interest from the regression is the intercept, where *dc* = 0 and the variation in temperature at *dc* = 0 most impacts the intercept.

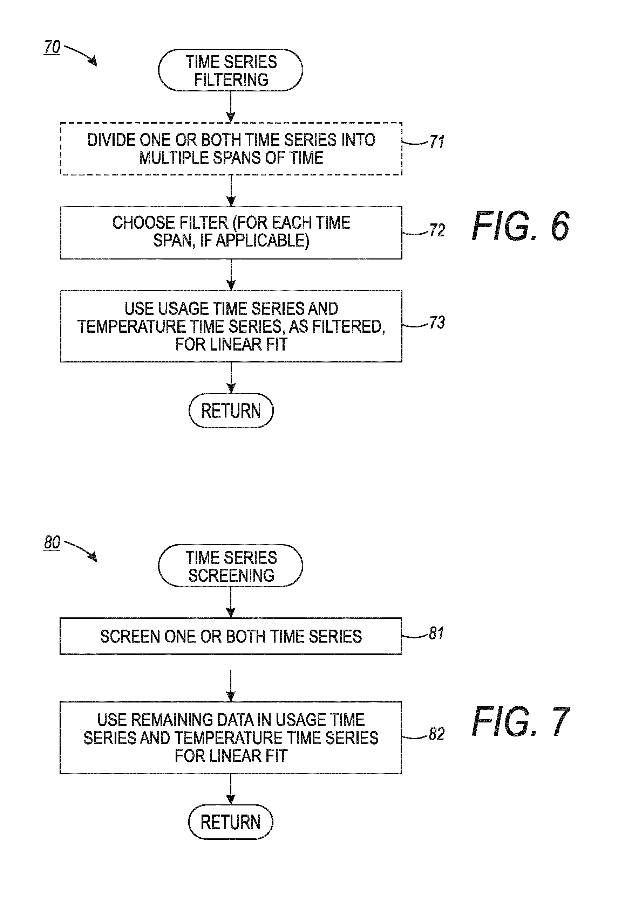

To improve the regression fit, any number of fitting techniques may be used, for instance, a frequentist regression (including an ordinary least-squares regression), a Bayesian regression, or a robust regression. These techniques can improve the robustness of the results when there are outliers in the data or knowledge of variations in the parameters that impact the duty cycle. When evaluating $T_A(dc)$, the slope is expected to vary over time, as the cooling power $Q_C$ of an air conditioner is expected to be a function of indoor and ambient temperatures and indoor humidity, which, in turn, is expected to be impacted by outdoor humidity. As a result, precise analysis over shorter time periods is a challenge and the assessment works best using data over long periods of time to make a comparison between houses. Appropriate screening may reduce the inaccuracies introduced by some of the foregoing effects, as further described infra with reference to FIGURE 7. Additionally, the data incorporates the time scales of the air conditioner and of the outdoor temperature, which allows non-linearities with temperature to be included in the analysis. For each cycle, either the duty cycle (the independent variable) or the temperature (the dependent variable) may be scaled by an additional function of the outdoor temperature to reflect any expected change in the cooling power of the air conditioner with outdoor temperature. If, for example, the cooling power is expected to scale linearly with outdoor temperature, so that

$$Q_C = Q_C^0 (A - B \cdot T_A),$$ the independent variable in the regression could be $dc(A - B \cdot T_A)$, instead of just $dc$. With the additional function accounting for non-linearities, the temperature $T_A$ of the intercept defines the effective thermostat set point $T_{eff}$. Where the dependent variable of temperature is a lagged variable to account for finite time constants or delays, this additional scaling of the duty cycle may be a function of the temperature without a lag, since the impact of the outdoor temperature on the functioning of the air conditioner is immediate compared to the delay between the changing ambient temperature and the load experienced by the thermostat inside the house. Incorporation of other nonlinearities due to temperature or other weather parameters in the weather data, such as humidity or barometric pressure, could be similarly considered.

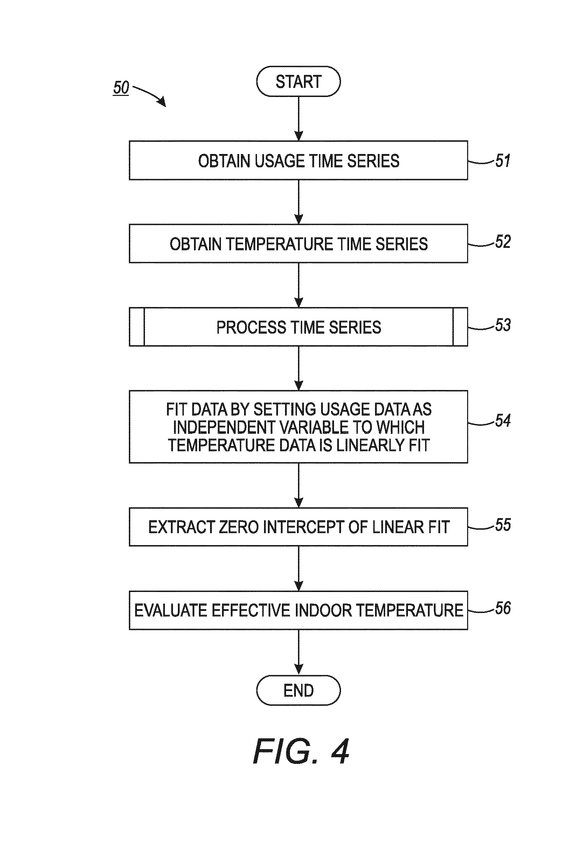

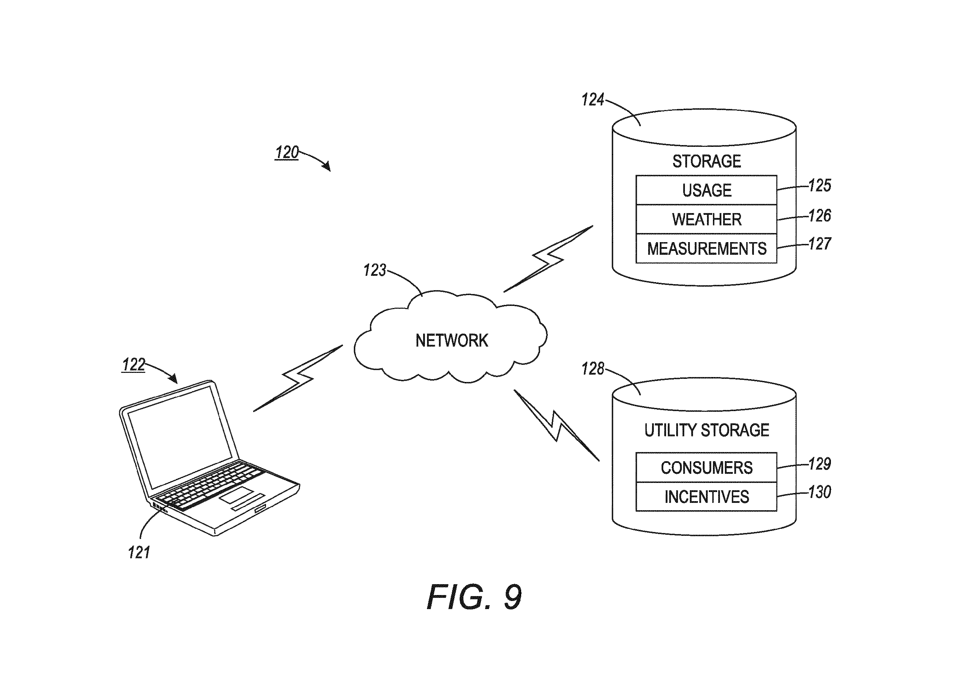

Subject to the foregoing considerations, the effective thermostat set point $T_{eff}$ of a building, which can also serve as a surrogate for effective indoor temperature, can be determined. FIGURE 4 is a flow diagram showing a computer-implemented method 50 for externally inferring an effective indoor temperature in a building in accordance with one embodiment. The method is performed as a series of process or method steps performed by, for instance, a general purpose programmed computer, such as further described infra with reference to FIGURE 9.

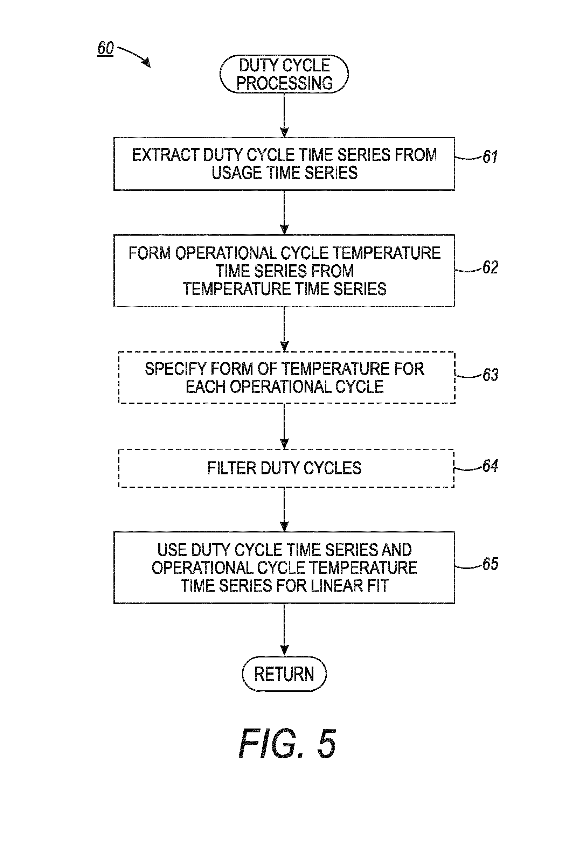

Only a limited set of information about the building is needed to externally infer an effective indoor temperature. First, a time series of indoor climate control system usage data, which reflects usage of the system in the building over several operating cycles, is obtained (Step 51). The data in the usage time series can be expressed as binary indications of whether the indoor climate control system is running or at idle at any given time. Second, a time series of weather information, specifically, ambient temperature $T_A$, for the same operating cycles as the usage time series, is obtained (Step 52). Preferably, the time series include enough data for study over a long enough period of time to include the natural variations in ambient temperature and indoor climate control system running conditions as needed to make a sound analysis. Optionally, one or both of the times series data can be processed, filtered, or screened (Step 53), as further described infra respectively with reference to FIGURES 5-7.

The usage time series data can be processed in operating cycles with each operating cycle characterized by a duty cycle. For each operating cycle, a duty cycle is the ratio of the time that the system is running to the total time of the operating cycle. An operating cycle is defined as a window of time during which the indoor climate control system undergoes two discrete state transitions, a "go-to-idle" state transition during which the system transitions from a running state to an at idle or on standby state, and a "go-to-run" state transition during which the indoor climate control system transitions from an at idle or on standby state to a running state. The indoor climate control system runs for a period of time between each "go-to-run" state transition and the next "go-to-idle" state transition, and the indoor climate control system remains at idle or on standby for a period of idle time between each "go-to-idle" state transition and the next "go-to-run" state transition. The ambient temperature at which an air conditioner first starts running suffers from a delay between the time that ambient temperature changes and the time that the load is experienced by the air conditioner. The system runs for the time necessary to bring the building's interior temperature into a temperature range defined about or around a desired indoor temperature for the building. The window of time can be shifted forward or backward, such that an operating cycle begins while the system is running, then transitions to at idle or on standby, and subsequently starts running again, or while the system is at idle or on standby, transitions to running, and subsequently goes to idle or on standby again, so long as the shifting of the window of time is consistent for all operating cycles.

Duty cycle processing will now be explained. FIGURE 5 is a flow diagram showing a routine 60 for processing duty cycles for use in the method 50 of FIGURE 4. As an initial step, a duty cycle time series that includes the duty cycles for the system over time is extracted from the usage time series (Step 61). An operating cycle temperature time series is also formed by assigning a temperature from the temperature time series to each operating cycle (Step 62). Optionally, a specific form of temperature can be specified for each operating cycle (Step 63), including mean temperature, median temperature, temperature when the indoor climate control system is running, temperature when the indoor climate control system is at idle or on standby, temperature at the beginning of the operating cycle, a mean temperature over a period of time that begins before the operating cycle, a temperature at a time before the operating cycle, a temperature at the end of the operating cycle, and a temperature derived from interpolation of the temperature time series to match time stamps in the usage time series. Other forms of temperature are possible, such as the mean temperature over the hour prior to the given cycle or the moving average of the temperature at a time that defines the operating cycles. Also optionally, the duty cycle time series can be filtered (Step 64), such as by removing cycles that have high or low duty cycles (and thereby retaining only the intermediate duty cycles), retaining only cycles with select values of the duty cycle, retaining cycles with only select values of the desired indoor temperature, or retaining duty cycles for only select hours days, weeks, months, times of the year, or time periods, or based on a pre-defined selection criteria that may be related to ambient conditions, quality of data, or any other information. Other screens or filters are possible.

The duty cycles, extracted as described *supra*, can be considered to be the result of just one choice of a data filter with a varying-length filtering window applied to the raw usage time series. If no filter is applied to the usage time series, the raw data are similar to a binary indication at each point in time of whether the indoor climate control system is running or at idle (or on standby). If a point in the usage time series includes a time period over which the indoor climate control system switches on or off, that point may have an intermediate value. In a further embodiment, these raw data, which may be rounded to give a truly binary indication of whether the indoor climate control system is running or at idle (or on standby) at any measured point in time, provides an alternative to the extraction of the duty cycle. This binary signal could then be filtered to remove any noise introduced from unknown disturbance variables, for instance, high frequency or isolated variations caused by unmeasured effects on the system, such as a sudden gust of wind, sudden cloud cover, a rapid influx of visitors, and so forth. Filtering and screening to retain only cycles of certain lengths or of certain duty cycles could also be applied in this case. In this embodiment, a temperature is assigned from the temperature time series to each point in the usage time series. If the two time series have the same time resolution, unfiltered data may be used. If there are different time resolutions, the temperature assigned to each point in the usage time series may be an average temperature over a period of time or an interpolation of the temperature to match the time stamp of the usage time series, or a lagged version of either the raw or interpolated temperature time series.

Either or both of the raw usage time series and the temperature time series can be filtered. Screening, as further described *infra* with reference to FIGURE 7, if applicable, generally occurs after filtering. FIGURE 6 is a flow diagram showing a routine 70 for filtering the time series data for use in the method 50 of FIGURE 4. Optionally, one or both of the time series can be divided into multiple spans of time and, if desired, a different filter or different screen can be selected for each time span (Step 71). One or more filter is applied to one or both of the time series (Step 72), such as an exponential filter, a moving average filter, a weighting moving average filter, a low pass filter, a band pass filter, and a noise smoothing filter. As well, a time delay filter could be chosen to introduce a lag into the temperature time series, as compared to the usage time series. Choosing operating cycles and defining a duty cycle for each duty cycle is one example of a filter. Different filters can be appropriate for different situations. For example, the exact solution to a first order model of a house is known to be a convolution with an exponential function. The exponential filter can account for the exponential decay of temperature with time, for example, in this simple thermal model of the house. In one embodiment, the usage time series and the temperature time series are both filtered with an exponential filter to reflect the physical time scale of the house. The time constant of the filter is adjusted based upon information about the type, size, or construction of the house. The time constant may also be adjusted to maximize the quality of the regression. The time constant may further be chosen as a value that is considered typical for houses of a certain type or may be chosen to be either much smaller or much larger than is considered to be typical, to reduce bias when the exact time constant is unknown.

Other filters or combinations of filters are possible; ultimately, the most appropriate filter may be determined from comparing the model results to test data from representative houses. Use of such filters is enabled by having data at a time resolution appropriate to the physical time scales of the system, and these filters enable the definition of a more robust parameter for the effective thermostat set point $T_{eff}$. Finally, the linear fit is performed on the usage time series and the temperature time series, as filtered (Step 73) and, if applicable, screening, as further described *infra* with reference to FIGURE 7.

The usage time series can also be screened. Filtering, as described *supra* with reference to FIGURE 6, if applicable, generally occurs before screening, but does not have to occur before screening. In appropriate cases, the ordering of filtering and screening may be reversed, depending upon the nature of the data, type of filtering and screening. FIGURE 7 is a flow diagram showing a routine 80 for screening the time series data for use in the method 50 of FIGURE 4. The usage time series can be screened (Step 81), such as by removing long or short operating cycles (and thereby retaining only the operating cycles of intermediate duration), retaining only select operating cycles, or retaining operating cycles for only select hours days, weeks, months, times of the year, or time periods. The usage time series can also be screened by removing periods of time when the temperature is in a certain range, when there are no available temperature data, or when the data are not trusted. Other screens are possible. Finally, the linear fit is performed on the usage time series, as filtered, as described *supra*, if applicable, and screened, and the temperature time series (Step 82).

Referring back to FIGURE 4, a linear fit of the usage time series data and the ambient temperature $T_A$ time series data is performed (Step 54). The usage data is considered the independent variable to which the ambient temperature data is linearly fit. In this context, a linear fit constitutes a regression analysis in which the estimated relationship between the dependent variable and one or more independent variables is substantially linear in the dependent variables and other terms in the estimated relationship besides a constant term and the substantially linear terms are smaller in magnitude or negligible. The linear fit could be, for example, an ordinary least squares linear regression, any other frequentist regression, a Bayesian regression, or a robust regression. Other suitable forms of linear fits are possible, including adding categorical variables or discrete variables to the regression to consider days of the week, holidays and non-holidays, or other descriptors. In this context, the definition of independent variable and dependent variable is based on choice of statistical analysis, rather than physical relationship. As described herein, a regression is a statistical process for estimating the relationships among variables.

The temperature at the point of intercept of the linear fit at which the usage equals zero can be extracted to obtain the effective thermostat set point $T_{eff}$ of a house 11 (Step 55). Assessing the thermostat set point from cycles over a full day, or even better, over many days, leads to a more accurate assessment of the average thermostat set point over that time period, particularly when compared to naive approaches to determining thermostat set point, such as using the temperature in a day at which an air conditioner first starts running or last goes to idle or standby.

The effective thermostat set point $T_{eff}$ of a house 11 is not the actual thermostat set point. Rather, $T_{eff}$, analogous to the balance point temperature, as described using a steady-state energy balance in the ASHRAE Handbook, cited *supra,* is offset from the actual thermostat set point or indoor temperature. Consequently, $T_{eff}$ is most useful for making comparisons between houses. Note the ASHRAE Handbook, cited *supra,* defines the balance point temperature by defining K as the total heat loss coefficient, rather than thermal conductance, whereas, herein, K is described as a bulk thermal conductance. Although this model is derived with only thermal conductance (and no convection or radiation), all methods of heat transfer between indoor air temperature and outdoor temperature could be bundled into one total heat loss coefficient without loss of meaning. In particular, sensible thermal load due to infiltration of air from outside to inside a house results in a load that is also proportional to the temperature difference between inside and outside. Thus, in this model, the constant of proportionality for this method of heat transfer is included in *K* and cannot be separated from conduction.

The temperature at which an air conditioner first starts running is also an assessment of the indoor temperature, but that temperature suffers from the delay between the time that ambient temperature changes and the time that the load is experienced by the air conditioner. In the determination of $T_{eff}$, delays, changes in behavior, and changes in load are averaged over multiple cycles in a way that may lead to greater accuracy.

Finally, the effective indoor temperature can be evaluated (Step 56). One type of evaluation is with respect to providing energy consumption reduction incentives. In particular, the findings of effective thermostat set points $T_{eff}$ can be used to distinguish among a group of utility customers to determine which ones should be targeted for certain interactions. For example, a customer that uses a lot of energy for air conditioning and who has a low effective thermostat set point, compared to other customers, might first be offered an incentive for changing a thermostat set point before being offered a weatherization package. Having a low effective thermostat set point, as compared to other customers, does not necessarily mean that a particular customer has an extraordinarily low indoor temperature or actual thermostat set point; rather, the low effective thermostat set point is an indication, based on assumptions about the relative magnitude of conduction load and non-conduction load and the house-to-house variance in non-conduction load, that the customer is more likely than other customers to have an extraordinarily low thermostat set point. Similarly, an energy outlier with a very high effective set point can be assumed to have neither a low actual thermostat set point, extraordinary internal load, or a very leaky house; this energy outlier may be incented to do maintenance on or replace an inefficient air conditioner.

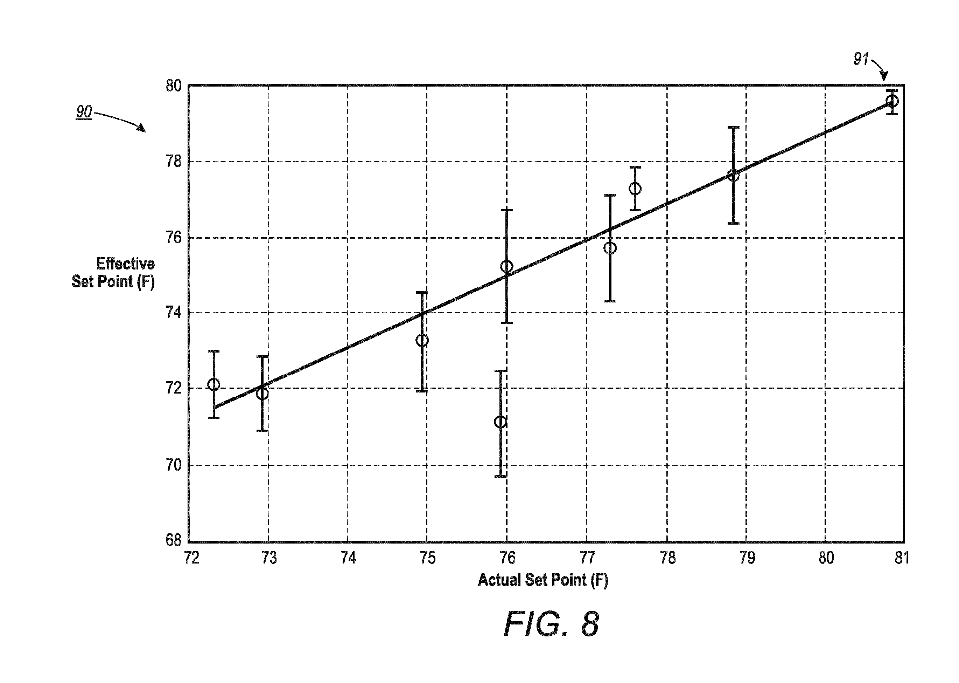

The ability to externally infer effective indoor temperature provides a power utility with the tools to better discriminate among customers in terms of their energy consumption. FIGURE 8 is a graph comparing, by way of example, effective thermostat set point to actual thermostat set point for a plurality of houses. The x-axis represents actual thermostat set point $T_0$ in degrees Fahrenheit. The *y*-axis represents effective thermostat set point $T_{eff}$ in degrees Fahrenheit. Each point represents a house and the error bars represent statistical error from the regression. The house 91 with the highest actual thermostat set point also has the highest effective thermostat set point. Aside from the one outlier with error bars that do not intersect the black line fit, the houses with the lowest actual thermostat set points also have the lowest effective thermostat set points. Thus, the effective thermostat set point $T_{eff}$ provides a useful comparison of the actual thermostat set points among a group of houses. The effective thermostat set point $T_{eff}$ provides a powerful qualitative and indirect measurement when quantitative accuracy is neither needed nor easily-achieved.

Alternatively, if a power utility is offering rebates, incentives, or education to the owner, occupant, or responsible party of a house for smart thermostats or incentives to change behavior, those offerings might be offered first to those customers with the lowest quartile effective thermostat set points. Comparisons can be made based on indirect information, and based on these comparisons, a power utility is better able to target rebate and incentive programs. A power utility can also monitor the impacts of energy efficiency programs. For instance, a power utility can compare the effective thermostat set points $T_{eff}$ of a group of buildings. The comparison can be used, for instance, to better understand why one or more of the buildings use more energy for indoor climate control than other buildings and to help narrow the set of likely reasons for excessive energy consumption. In particular, the power utility can determine whether a house is more likely to have an extraordinary thermostat set points based on the house's respective effective indoor temperature.

The power utility can also use the comparison of effective thermostat set points $T_{eff}$ to choose which recommendations to make to building owners, occupants, or managers for reducing energy consumption. In addition, the findings can be used by third parties who want to advertise or offer products and services for reducing energy consumption or optimizing or changing indoor climate control to building owners, occupants, managers, or responsible parties. For example, a company that makes thermostats that are designed to encourage responsible setting of the thermostat set point might want to market the thermostat to customers with low effective thermostat set points. Other uses of the comparison are possible.

If the actual thermostat set point or some other measurement of an indoor temperature is known, the power utility can make further assessments based on the difference between $T_{eff}$ and the other assessment of indoor temperature. Houses that have a different relationship between actual and effective thermostat set points, when compared to those relationships of actual and effective thermostat set points for the majority of the houses being compared, are houses that are expected to have cooling loads that are much different in magnitude than the cooling loads of the other houses or to have a thermal connection, that is, effective thermal conductance $K$, to the outdoors that is much different in magnitude from the other houses. Since the slope of the regression indicates $Q_C/K$, the combination of the slope of the regression and the intercept can be used to determine $Q/Q_C$, given $T_{eff}$ and some other measurement of $T_0$. With further information about the house, as used to estimate $K$, the air conditioner, as characterized by $Q_C$, or internal and external loads that constitute $Q$, the difference between $T_{eff}$ and any other measurement of the actual indoor temperature can be used to further compare thermal performance between buildings. A house with an anomalously large difference between $T_{eff}$ and a measured indoor temperature may also have a poorly-situated thermostat or may be a very leaky house; a power utility may choose to audit such a house for further diagnosis.

In a broader sense, the effective thermostat set point $T_{eff}$ can be used to assess a change in the average thermostat set point or cooling load from one period of time to another. The comparison of the effective thermostat set point $T_{eff}$ from one period of time to another can be used to assess the effectiveness of changes in behavior with respect to indoor climate control system usage. Last, the effective thermostat set point $T_{eff}$ can also be used to assess the impact of structural changes to a building, indoor climate control system, or environs. These assessments are made by comparing $T_{eff}$ from time periods before and after changes are made. A power utility might incent a change in behavior, such as changing a thermostat set point; a purchasing decision, such as purchasing a new thermostat; a change to the house, such as weatherization; a change to the property around the house, such as planting shade trees; a change in the control of the air conditioning, such as adjusting the deadband; maintenance on the air conditioning; a house energy audit; change in usage of the building, such as keeping shades down during the sunny times of the day; change in usage of things inside the building, such as turning appliances off when not use. The incentives can include rebates, discounts, offers of free products or services, and so forth.

Inferring the effective indoor temperature of a building, as reflected by the effective thermostat set points $T_{eff}$, can also be used for other purposes. For instance, the difference between the effective indoor temperature of a building and an indication of the (actual) indoor temperature, taken while the indoor climate control system was operating, can be determined, which can provide a sense of the relative accuracy of the effective thermostat set point assessment. Additionally, the effective indoor temperature of a building can be inferred to do further thermal analysis of a house, such as calculating infiltration load, that depends upon knowing the indoor temperature. The effective indoor temperature may be taken to be the effective thermostat set point or the effective indoor temperature may be taken to be a temperature, for example, a few degrees above the effective thermostat set point. The effective indoor temperature of a building can also be inferred to calibrate other tools for thermal analysis of a house, such as analysis based on thermal imaging of the outside of a house. Moreover, the effective indoor temperature of a building can be inferred to do further analysis of indoor climate control system energy usage in a building or in a group of buildings. Still other uses of the effective indoor temperature are possible.

The foregoing methodology, as described *supra* with reference to FIGURES 4-7, can be performed by one or more computers operating independently or over a network. FIGURE 9 is a block diagram showing a computer-implemented system 120 for externally inferring an effective indoor temperature in a building in accordance with one embodiment. The methodology can be implemented as a computer program 122 for execution by a personal computer 121 or similar computational device, which include components conventionally found in general purpose programmable computing devices, such as a central processing unit, memory, input/output ports, network interfaces, and non-volatile storage, although other components are possible.

The personal computer 121 can either operate stand-alone or be interconnected over a network 123, which could be a local area network, enterprise network, or wide area network, including the Internet, or some combination thereof. The personal computer 121 can include a storage device (not shown) or storage 124 can be provided over the network 123. The storage is used to store the energy usage data 125, weather information 126, and, if available, measurements 127 of actual building data, such as indoor temperature. In addition, a power utility (not shown) may maintain a storage device 128 to track their customers 129 and incentives 130. Other data can also be stored.

While the invention has been particularly shown and described as referenced to the embodiments thereof, those skilled in the art will understand that the foregoing and other changes in form and detail may be made therein without departing from the spirit and scope of the invention.

**Claims**

1. A computer-implemented method for externally inferring an effective indoor temperature in a building, comprising the steps of:

   obtaining a usage time series that reflects indoor climate control system usage in a building over a plurality of operating cycles, each operating cycle comprising a "go-to-idle" state transition during which the indoor climate control system transitions from a running state to an at idle state and a "go-to-run" state transition during which the indoor climate control system transitions from an at idle state to a running state, the indoor climate control system running for a period of running time between each "go-to-run" state transition and the next "go-to-idle" state transition, the indoor climate control system remaining at idle for a period of idle time between each "go-to-idle" state transition and the next "go-to-run" state transition, the running time comprising the time necessary to bring the building's interior temperature into a temperature range defined about a desired indoor temperature for the building;
   obtaining a temperature time series for the temperature ambient to the building over the same plurality of the operating cycles;
   performing a linear fit of the usage time series and the temperature time series; and
   extracting the temperature at an intercept of the linear fit at which the usage equals zero as an effective indoor temperature of the building,
   wherein the steps are performed on a suitably-programmed computer.

2. A method according to Claim 1, further comprising the step of:

   specifying that data in the usage time series comprises independent variables to which data in the temperature data are linearly fit.

3. A method according to Claim 1, further comprising the step of:

   defining the usage time series as binary indications of whether the indoor climate control system is running or at idle at any given time.

4. A method according to Claim 1, further comprising the steps of:

   extracting a duty cycle time series from the usage time series that reflects a percentage of each operating cycle that the indoor climate control system was running;
   forming an operating cycle temperature time series by assigning a temperature from the temperature time series to each operating cycle; and
   performing the linear fit on the duty cycle time series and the operating cycle temperature time series.

5. A method according to Claim 4, further comprising the step of:

   creating the operating cycle temperature time series comprising, for each operating cycle in the duty cycle time series, one of a mean temperature, a median temperature, a temperature when the indoor climate control system is running, a temperature when the indoor climate control system is at idle, a temperature at the beginning of the operating cycle, a mean temperature over a period of time that begins before the operating cycle, a temperature at a time before the operating cycle, and a temperature at the end of the operating cycle, and a temperature derived from interpolation of the temperature time series to match time stamps in the usage time series.

6. A method according to Claim 4, further comprising at least one of the steps of:

   removing at least one of high duty cycles and low duty cycles from the duty cycle time series, and also removing the temperatures that were assigned to the removed duty cycles from the operating cycle temperature time series, both prior to performing the linear fit;

retaining only select duty cycles in the duty cycle time series, and also retaining only the temperatures that were assigned to the retained duty cycles in the operating cycle temperature time series, both prior to performing the linear fit;

retaining only select values of the operating cycle temperature time series, and also retaining only the duty cycles in the duty cycle time series that were assigned to the select values of the operating cycle temperature time series, both prior to performing the linear fit; and

retaining duty cycles in the duty cycle time series for only select hours days, weeks, months, times of the year, or time periods, and also retaining only the temperatures that were assigned to the retained duty cycles in the operating cycle temperature time series, prior to performing the linear fit.

7.  A method according to Claim 1, further comprising at least one of the steps of:

scaling at least one of the usage time series and the temperature time series at each point by a function of ambient temperature; and

creating a lagged temperature variable by shifting the temperature time series by a certain amount of time.

8.  A method according to Claim 1, further comprising the steps of:

applying one or more filters to at least one of the usage time series and the temperature time series; and

performing the linear fit on the at least one of the usage time series and the temperature time series as filtered.

9.  A method according to Claim 1, further comprising the steps of:

obtaining an indication of the indoor temperature that was taken while the indoor climate control system was operating; and

determining a difference between the indoor temperature indication and the effective indoor temperature.

10.  A method according to Claim 9, further comprising the steps of:

finding the effective indoor temperatures in each of a plurality of buildings that include the building;

obtaining indications of the indoor temperature that was taken while the indoor climate control systems in each of the plurality of buildings was operating; and

comparing the buildings, comprising at least one of the steps of:

assessing either thermal performance or relative sizing of thermal loads across the buildings based on a difference between the indoor temperature indications and the effective indoor temperatures;

narrowing the set of reasons that one of the buildings may consume more energy for indoor climate control than another of the buildings based on the comparison of the difference between indoor temperature indication and the effective indoor temperature; and

assessing a change in thermal performance or relative sizing of the thermal loads by comparing from one time period to another time period the differences between the indoor temperature indications and the effective indoor temperatures.

FIG. 1

FIG. 2

FIG. 3

FIG. 4

60

```
         ╭─────────────────╮
         │  DUTY CYCLE     │
         │  PROCESSING     │
         ╰─────────────────╯
                  │
                  ▼
┌─────────────────────────────────────┐
│  EXTRACT DUTY CYCLE TIME SERIES FROM │──61
│        USAGE TIME SERIES             │
└─────────────────────────────────────┘
                  │
                  ▼
┌─────────────────────────────────────┐
│  FORM OPERATIONAL CYCLE TEMPERATURE  │
│        TIME SERIES FROM              │──62
│      TEMPERATURE TIME SERIES         │
└─────────────────────────────────────┘
                  │
                  ▼
┌╌╌╌╌╌╌╌╌╌╌╌╌╌╌╌╌╌╌╌╌╌╌╌╌╌╌╌╌╌╌╌╌╌╌╌╌╌┐
╎  SPECIFY FORM OF TEMPERATURE FOR    ╎──63
╎      EACH OPERATIONAL CYCLE         ╎
└╌╌╌╌╌╌╌╌╌╌╌╌╌╌╌╌╌╌╌╌╌╌╌╌╌╌╌╌╌╌╌╌╌╌╌╌╌┘
                  │
                  ▼
┌╌╌╌╌╌╌╌╌╌╌╌╌╌╌╌╌╌╌╌╌╌╌╌╌╌╌╌╌╌╌╌╌╌╌╌╌╌┐
╎        FILTER DUTY CYCLES           ╎──64
└╌╌╌╌╌╌╌╌╌╌╌╌╌╌╌╌╌╌╌╌╌╌╌╌╌╌╌╌╌╌╌╌╌╌╌╌╌┘
                  │
                  ▼
┌─────────────────────────────────────┐
│  USE DUTY CYCLE TIME SERIES AND      │
│  OPERATIONAL CYCLE TEMPERATURE       │──65
│  TIME SERIES FOR LINEAR FIT          │
└─────────────────────────────────────┘
                  │
                  ▼
            ╭───────────╮
            │  RETURN   │
            ╰───────────╯
```

# FIG. 5

_70_

( TIME SERIES
FILTERING )

↓

┌ ─ ─ ─ ─ ─ ─ ─ ─ ─ ─ ─ ─ ─ ─ ─ ─ ─ ─ ─ ┐
│ DIVIDE ONE OR BOTH TIME SERIES INTO │ ─71
│ MULTIPLE SPANS OF TIME │
└ ─ ─ ─ ─ ─ ─ ─ ─ ─ ─ ─ ─ ─ ─ ─ ─ ─ ─ ─ ┘

↓

┌─────────────────────────────────┐
│ CHOOSE FILTER (FOR EACH TIME │ ─72        *FIG. 6*
│ SPAN, IF APPLICABLE) │
└─────────────────────────────────┘

↓

┌─────────────────────────────────┐
│ USE USAGE TIME SERIES AND │
│ TEMPERATURE TIME SERIES, AS FILTERED, │ ─73
│ FOR LINEAR FIT │
└─────────────────────────────────┘

↓

( RETURN )


_80_

( TIME SERIES
SCREENING )

↓

┌─────────────────────────────────┐
│ SCREEN ONE OR BOTH TIME SERIES │ ─81
└─────────────────────────────────┘

↓

┌─────────────────────────────────┐
│ USE REMAINING DATA IN USAGE TIME │
│ SERIES AND TEMPERATURE TIME SERIES │ ─82        *FIG. 7*
│ FOR LINEAR FIT │
└─────────────────────────────────┘

↓

( RETURN )

*FIG. 8*

FIG. 9

Europäisches
Patentamt

European
Patent Office

Office européen
des brevets

## EUROPEAN SEARCH REPORT

Application Number

EP 15 15 8196

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| | The claimed subject-matter, with due regard to the description and drawings in accordance with Art. 92 EPC, relates to processes comprised in the list of subject-matter and activities excluded from patentability under Art. 52(2) and (3) EPC. Although the claimed subject matter has been judged technically sufficient to overcome this objection, the information technology employed as an enabler for carrying out said processes is nonetheless considered conventional. Its use for carrying out non-technical processes forms part of the common general knowledge, and it was widely available to everyone at the date of filing of the present application. As such, the notoriety of such prior art cannot reasonably be contested. Therefore no documentary evidence is considered necessary at this point in time.(See Official Journal EPO 11/2007, pages 592ff and 594ff)<br><br>----- | | INV.<br>G06Q10/10<br>G05D23/00<br><br><br><br><br><br><br><br><br><br><br><br>TECHNICAL FIELDS<br>SEARCHED (IPC)<br><br>G06Q<br>G05D |

The present search report has been drawn up for all claims

| Place of search | Date of completion of the search | Examiner |
|---|---|---|
| The Hague | 24 July 2015 | Moynihan, Maurice |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 14228209 B

- US 14228211 B

**Non-patent literature cited in the description**

- **M. FELS et al.** *PRISM: An Introduction, Energy and Bldgs.,* 1986, vol. 9, 5-18

- 2013 ASHRAE Handbook. 2013